# FASCICULE DE BREVET EUROPEEN

(11) **EP 2 062 204 B1**
(45) Date de publication et mention de la délivrance du brevet: **28.03.2012**
(21) Numéro de dépôt: 07823668.4
(22) Date de dépôt: 31.07.2007
(51) Int. Cl.: G06K 19/077, G07D 7/00, D21H 21/48

(54) **ARTICLE AVEC UNE STRUCTURE DE SECURITE**
ARTIKEL MIT EINER SICHERHEITSSTRUKTUR
ARTICLE WITH A SECURTIY STRUCTURE

(30) Priorité: 01.08.2006 FR 0653231
(43) Date de publication de la demande: 27.05.2009
(73) Titulaire: Arjowiggins Security, 92130 Issy Les Moulineaux (FR)
(72) Inventeur: CAMUS, Michel, 38140 Rives Sur Fure (FR); DOUBLET, Pierre, 77160 Saint-Brice (FR); MARLIN, Pascal, 77120 Coulommiers (FR)
(74) Mandataire: Tanty, François
(86) Numéro de dépôt international: PCT/FR2007/051753
(87) Numéro de publication internationale: WO 2008/015363

(56) Documents cités:
- WO-A-02/02350
- WO-A-02/50890
- DE-A1- 10 052 402
- FR-A1- 2 827 986

## Description

La présente invention concerne une structure de sécurité destinée à être incorporée ou fixée au moins partiellement dans ou sur un article, notamment un document de sécurité et/ou de valeur.

On connaît par la demande de brevet DE 198 49 762 un chèque de voyage comportant une bande flexible en polymère portant une puce électronique, la bande et la puce étant noyées au sein d'une, couche de papier du chèque. La bande porte en outre deux. pistes métalliques de part et d'autre de la puce électronique formant une antenne bipolaire connectée à cette puce.

On connaît également par la demande internationale WO 03/015016 un document comprenant, au sein d'une couche fibreuse, une bande de sécurité portant une puce électronique. Cette puce peut comporter une antenne intégrée, couplée éventuellement à une antenne supplémentaire afin d'accroître la portée de détection de la puce, cette antenne supplémentaire étant par exemple réalisée par sérigraphie sur la couche fibreuse.

La demande internationale WO 02/02350 décrit une structure de sécurité multicouche destinée à être fixée sur un papier ou un document de sécurité, dont l'une des couches comporte une puce électronique et une autre comporte des éléments à effets optiques.

La demande de brevet DE 100 52 402 concerne un billet de banque comportant une structure de sécurité rectiligne munie à ses extrémités de deux antennes capacitives et présentant également un circuit intégré et un marquage optique tel qu'un code à barres.

Le billet comporte un deuxième élément de sécurité éloigné de sécurité. Aucun lien visuel n'est recherché entre le marquage optique et le deuxième élément de sécurité.

La demande internationale WO 02/50890 est relative à un élément de sécurité qui met en oeuvre une liaison électroconductrice entre une puce et un élément de couplage par l'intermédiaire d'une couche conductrice adhésive comportant des particules conductrices.

La demande de brevet FR 2 827 986 décrit un procédé de fabrication d'un article comportant une couche fibreuse et une puce électronique qui est amenée au contact de la couche fibreuse en formation à l'aide d'un support flexible de forme allongée.

Il existe un besoin pour bénéficier encore de nouvelles solutions pour la protection d'un article, notamment un document de sécurité et/ou de valeur, contre la falsification et/ou pour munir un article d'une puce électronique.

La présente invention vise notamment à répondre à ce besoin.

L'invention a pour objet, selon l'un de ses aspects, un article tel que défini dans la revendication 1.

L'élément de sécurité et/ou décoratif peut comporter des portions ayant une une forme bien définie, et le dispositif électronique peut être disposé d'une manière repérée relativement à ces portions, par exemple de manière centrée.

L'invention peut ainsi permettre de rendre plus difficile une tentative de fabrication de la structure de sécurité du fait de la présence sur celle-ci d'un motif pouvant être complexe.

L'invention peut également permettre d'incorporer de manière esthétique le dispositif électronique dans la structure de sécurité.

L'élément de sécurité et/ou décoratif peut, si on le souhaite, être détectable à l'oeil nu, en lumière visible, sans utilisation d'un appareil particulier.

Il est possible d'utiliser des éléments de sécurité et/ou décoratifs ayant des aspects différents, par exemple des couleurs différentes, afin de former un motif multicolore.

L'une des faces du support peut par exemple être recouverte entièrement par au moins deux éléments de sécurité et/ou décoratifs d'aspects différents.

L'élément de sécurité et/ou décoratif peut être opaque ou réfléchissant.

Dans un exemple de mise en oeuvre de l'invention, l'élément de sécurité et/ou décoratif se superpose partiellement au dispositif électronique.

En variante, le dispositif électronique et l'élément de sécurité et/ou décoratif sont disposés l'un par rapport à l'autre sans se superposer.

Le dispositif électronique et l'élément de sécurité et/ou décoratif peuvent se toucher ou non.

L'élément de sécurité et/ou décoratif peut définir par exemple au moins une fenêtre, notamment de forme rectangulaire ou carrée, dans laquelle est disposé le dispositif électronique.

Dans un exemple de mise en oeuvre de l'invention, l'élément de sécurité et/ou décoratif comporte au moins une couche de revêtement, électriquement conductrice ou non, pouvant comporter un métal, notamment de l'aluminium Cette couche de recouvrement peut masquer visuellement le dispositif électronique ou former un motif coopérant avec le dispositif électronique. La couche de recouvrement peut être déposée par métallisation sous vide. Le motif éventuel peut être réalisé par une démétallisation ou autrement.

La couche de revêtement peut présenter une épaisseur inférieure à 300 nm ou 100 nm, notamment 50 nm, étant par exemple d'environ 30 nm. Cette épaisseur est de préférence suffisamment faible afin de ne pas gêner la détection à distance du dispositif électronique lorsque cette couche recouvre le dispositif électronique.

La couche de revêtement peut être réfléchissante et/ou opaque.

Si on le souhaite, l'élément de sécurité et/ou décoratif peut être agencé pour générer au moins un effet optiquement variable, et comporter par exemple un hologramme.

L'élément de sécurité et/ou décoratif peut présenter un effet iridescent, le cas échéant.

Le dispositif électronique peut présenter un aspect métallisé, et comporter par exemple un substrat en silicium.

Dans un exemple de mise en oeuvre de l'invention, le dispositif électronique comporte une puce électronique pourvue d'au moins une antenne intégrée, la structure comportant avantageusement au moins une antenne d'amplification, appelée aussi antenne booster, couplée à l'antenne de la puce électronique, afin d'accroître la portée de détection de la puce.

L'antenne d'amplification peut être au moins partiellement visible ou, en variante, être totalement masquée par l'élément de sécurité et/ou décoratif.

Si on le souhaite, l'antenne d'amplification et l'élément de sécurité et/ou décoratif présentent des aspects différents, notamment des couleurs différentes.

Le support peut présenter au moins une cavité et le dispositif électronique peut être au moins partiellement engagé dans cette cavité. Cela peut faciliter l'intégration de la structure dans un document en évitant la création d'une surépaisseur ou en diminuant celle-ci.

Le support peut comporter une première et une deuxième couche, au moins dans le voisinage de la cavité, et cette dernière peut être formée dans la première couche.

Le dispositif électronique peut avoir une épaisseur sensiblement identique, voire moindre que la profondeur de la cavité.

La première couche peut porter une antenne d'amplification et la deuxième couche un revêtement, notamment une métallisation.

La structure peut comporter un revêtement opaque ou semi-réfléchissant derrière le dispositif électronique, notamment un revêtement en aluminium, ce qui peut permettre de créer différents effets optiques.

L'antenne d'amplification peut être réalisée en cuivre ou d'autres matériaux conducteurs.

Le support précité peut être flexible et/ou transparent, étant réalisé par exemple en matière plastique, notamment en polyester.

Dans un exemple de mise en oeuvre de l'invention, la structure présente une forme sensiblement en bande, notamment avec une largeur comprise entre 1 mm et 40 mm.

La structure peut être agencée pour pouvoir être incorporée au moins partiellement au sein d'une couche, notamment fibreuse, de l'article.

Le cas échéant, la structure peut comporter une couche de libération permettant son transfert sur une face de l'article, notamment par application de chaleur et/ou de pression. La structure peut alors former un « patch » ou « foil ».

La structure peut être au moins partiellement, par exemple entièrement, noyée dans une couche, notamment fibreuse, de l'article,

La structure peut comporter alternativement des zones noyées dans la couche fibreuse de l'article et des portions découvertes.

La structure de sécurité peut s'étendre d'un premier bord de l'article à un deuxième bord, opposé au premier.

L'article peut être destiné à constituer l'un des éléments suivants :
- un billet de banque, un papier de sécurité, un feuillet ou une couverture de passeport, un visa, un coupon, un document de valeur autre qu'un billet de banque, par exemple un chèque ou une carte de crédit, une étiquette de protection et/ou d'authentification, une étiquette de tracabilité, un ticket.

La demande décrit encore un article qui comporte:
- aumoins une couche, notamment fibreuse, portant une information, notamment sous la forme d'un premier motif visible,
- une structure de sécurité solidaire de cette couche et comportant :
   - un support,
   - un moins un dispositif électronique porté par le support,
   - au moins un élément de sécurité et/ou décoratif agencé pour former avec le dispositif électronique un deuxième motif ayant un lien avec l'information, ce deuxième motif étant identique à une homothétie près.

La demande décrit encore un procédé de fabrication d'un article, comportant les étapes suivantes:
- fournir une structure de sécurité telle que définie ci-dessus,
- incorporer ou transférer au moins partiellement la structure dans ou sur une couche, notamment fibreuse, de l'article.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, un exemple d'article réalisé conformément à l'invention,
- les figures 2 à 11 représentent, schématiquement et partiellement, différents exemples de structures de sécurité conformes à l'invention,
- la figure 12 illustre schématiquement une étape d'un procédé de fabrication de l'article de la figure 1,
- les figures 13 à 15 représentent, schématiquement et partiellement, en coupe transversale, des exemples d'incorporation de la structure de sécurité dans l'article,
- la figure 16 représente, schématiquement et partiellement, un article réalisé conformément à un autre exemple de mise en oeuvre de l'invention,
- la figure 17 illustre schématiquement une étape d'un procédé de fabrication de l'article de la figure 16,
- la figure 18 représente en vue de dessus un autre exemple de structure réalisée conformément à l'invention, et
- la figure 19 est une section longitudinale de la structure de la figure 18.

Sur le dessin, dans un souci de clarté, les proportions relatives des différents éléments représentés n'ont pas toujours été respectées, les vues étant schématiques.

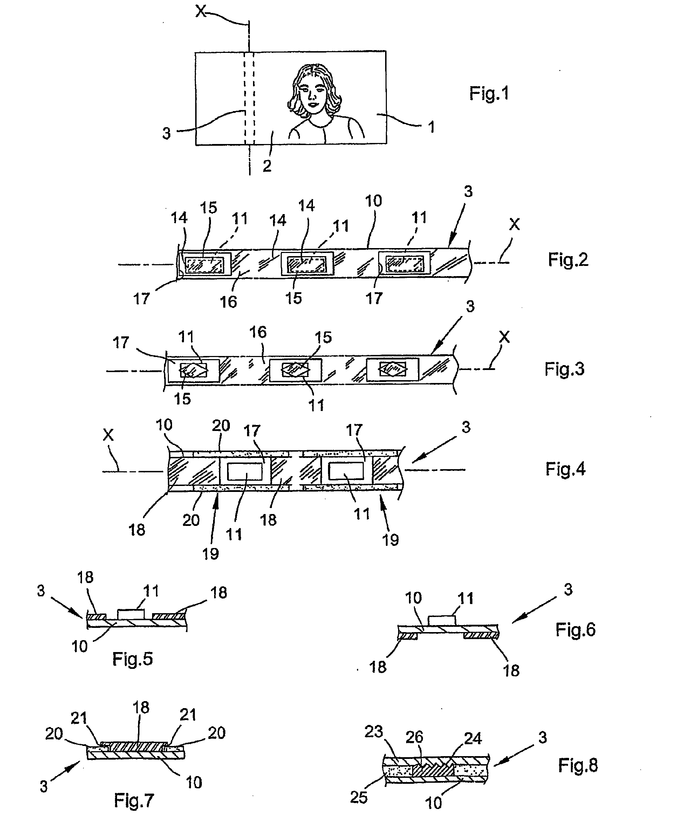

On a représenté sur la figure 1 un article 1, par exemple un billet de banque, comportant une couche fibreuse 2 dans laquelle est incorporée une structure de sécurité 3 réalisée conformément à un exemple de mise en oeuvre de l'invention.

L'article 1 peut encore constituer un papier de sécurité, un feuillet ou une couverture de passeport, un visa, un coupon, un document de valeur autre qu'un billet de banque, par exemple un chèque, une carte de crédit ou un ticket, une étiquette de protection et/ou d'authentification ou une étiquette de traçabilité, notamment lorsque l'article constitue un dispositif de conditionnement, une carte ou un ticket de transport ou d'entrée à un événement, un emballage sécurisé et/ou traçable.

La structure 3 se présente, dans l'exemple considéré, sous la forme d'une bande d'axe X, avec une largeur inférieure à celle de l'article 1, étant par exemple d'environ 2 mm.

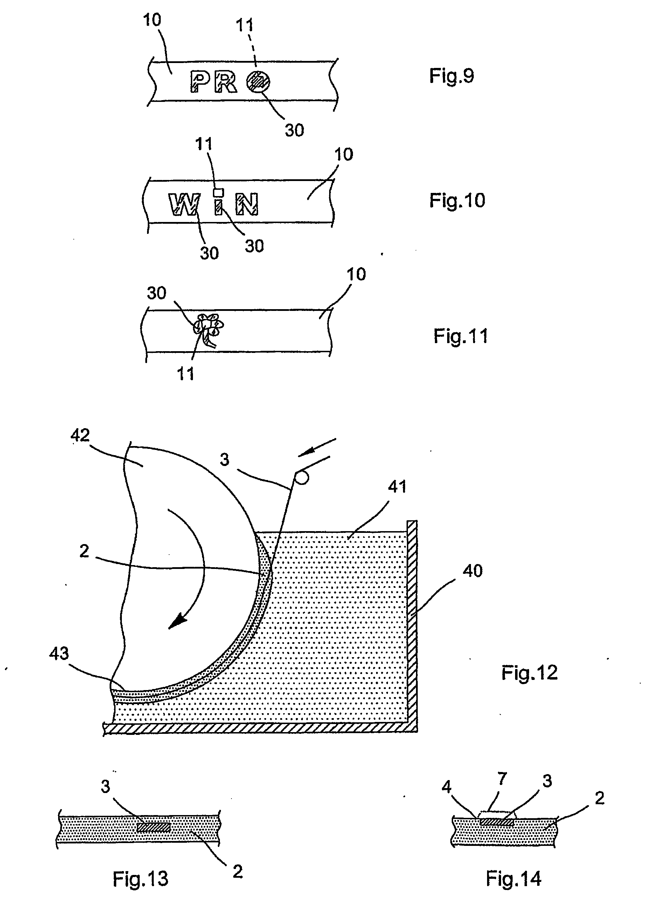

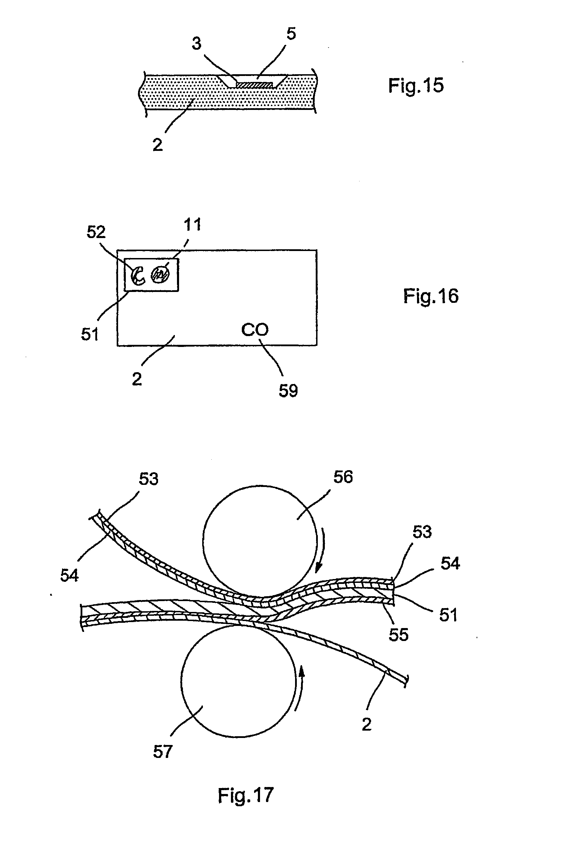

La structure 3 peut être complètement noyée au sein de la couche fibreuse 2, comme on peut le voir sur la figure 13. En variante, comme illustré sur la figure 14, la structure 3 vient à affleurement d'une face 4 de la couche 2. En variante encore, comme illustré sur la figure 15, la structure 3 est noyée partiellement dans la couche fibreuse 2, de manière à présenter alternativement des portions noyées et découvertes. A cet effet, la couche fibreuse 2 peut comporter des renfoncements 5 laissant des portions de la structure 3 découvertes. La couche fibreuse 2 peut comporter, le cas échéant, des bossages 7, représentés en pointillés sur la figure 14, recouvrant partiellement la structure 3. L'article 1 peut présenter, le cas échéant, des ajours facilitant l'observation de la structure 3.

La structure 3 peut comporter un support 10 en matière plastique transparente, notamment en polyester, comme illustré sur la figure 2.

Ce support 10 présente par exemple une épaisseur comprise entre 5 et 20 µm, étant par exemple voisine de 12 µm.

La structure 3 peut être fabriquée en rouleau et comporter, avant découpe lors de la réalisation de l'article 1, une pluralité de dispositifs électroniques 11 espacés régulièrement suivant l'axe X, par exemple des puces ou modules RFID.

Chaque dispositif électronique 11 comporte, dans l'exemple considéré, une puce de forme sensiblement rectangulaire ou carrée pourvue d'un substrat en silicium ayant un aspect métallique.

La puce peut par exemple présenter une forme sensiblement carrée de dimension 0,5 mm x 0,5 mm, être pourvue d'une antenne intégrée, non représentée, permettant une détection à distance de la puce, et être fixée sur une face du support 10 par collage ou thermosoudage.

La structure 3 comporte au moins un élément de sécurité et/ou décoratif 14, visible à l'oeil nu, porté par le support 10, recouvrant une portion seulement d'une face de celui-ci, et sans action sur le fonctionnement du dispositif électronique 11.

Dans l'exemple considéré, les éléments de sécurité et/ou décoratifs 14 comportent une pluralité de portions métallisées 15 et 16 formées chacune par une couche d'un revêtement métallique, par exemple d'aluminium, formée par exemple par métallisation sous vide, séparées par des fenêtres 17 formées par démétallisation partielle.

Chaque portion métallisée 15 présente une forme sensiblement rectangulaire ou carrée, et se superpose à un dispositif électronique 11 afin de le masquer totalement.

La couche de revêtement métallique définissant chaque portion 15 d'occultation du dispositif électronique correspondant 11 présente par exemple une épaisseur d'environ 30 nm, ce qui permet de masquer le dispositif électronique 11 sous-jacent sans faire écran à une détection à distance de celui-ci, la conductivité électrique de cette couche étant relativement faible.

Dans l'exemple illustré sur la figure 2, chaque portion 15 définit un motif constitué d'une forme géométrique, à savoir un rectangle ou carré.

Dans l'exemple de la figure 3, chaque portion 15 se superpose seulement partiellement au dispositif électronique 11 associé, lequel participe à la formation d'un motif visible par transparence et/ou réflexion sur la structure 3.

Sur la figure 3, chaque portion 15 présente une forme de quadrilatère, par exemple de losange, de rectangle ou de carré et le dispositif électronique 11 est positionné relativement à la portion 15 de manière à dépasser par ses coins et définir ainsi un motif en forme d'étoile.

En variante, comme illustré sur la figure 4, le dispositif électronique 11 peut être totalement visible sur une face de la structure de sécurité 3, à travers des fenêtres 17 démétallisées.

La structure 3 comporte, dans cet exemple, d'une part des portions métallisées 18 sensiblement rectangulaires, s'étendant de part et d'autre des dispositifs électroniques 11, sans contact avec ceux-ci, et d'autre part, associée à chaque dispositif électronique 11, une antenne d'amplification 19 formée par une paire de pistes conductrices 20 permettant d'accroître la portée de détection du dispositif électronique 11.

Ces pistes 20 sont par exemple réalisées en cuivre et s'étendent par exemple parallèlement à l'axe X, de part et d'autre du dispositif électronique 11 correspondant.

L'antenne d'amplification 19 peut être couplée à une antenne intégrée du dispositif électronique 11.

Un motif multicolore peut être formé lors de l'emploi de matériaux différents pour réaliser les pistes conductrices 20 et les portions métallisées 18.

Les portions métallisées 18 et le dispositif électronique 11 peuvent être présents sur une même face du support 10, comme illustré sur la figure 5.

En variante, comme illustré sur la figure 6, les portions métallisées 18 et le dispositif électronique 11 sont présents respectivement sur deux faces opposées du support 10, le support 10 étant alors de préférence transparent afin de permettre l'observation simultanée depuis une face de la structure 3 du dispositif électronique 11 et des portions métallisées 18.

Dans l'exemple illustré à la figure 4, les portions métallisées 18 et les pistes conductrices 20 de l'antenne d'amplification 19 sont adjacentes et ne se superposent pas.

En variante, comme illustré sur la figure 7, les portions métallisées 18 se superposent partiellement aux pistes conductrices 20, un vernis 21 isolant électrique pouvant être prévu entre les pistes conductrices 20 et les portions métallisées 18.

On a représenté sur la figure 8 une structure 3 agencée pour générer un effet optiquement variable, notamment grâce à un réseau de diffraction.

La structure 3 comporte une couche transparente 23 présentant une microstructure 24 recouverte d'un métal réfléchissant tel qu'une couche d'aluminium 26 afin de générer un hologramme.

Des couches 25 formant les pistes conductrices d'une antenne d'amplification associée à un dispositif électronique 11 porté par le support 10 sont présentes de part et d'autre de la couche d'aluminium 26.

Pour la construction de la structure 3 illustrée sur la figure 8, il est possible de se référer par exemple à la demande internationale WO 2006/046216.

On va maintenant donner des exemples de motifs pouvant être formés conformément à l'invention.

La figure 9 illustre un motif défini par une série de caractères alphanumériques, le dispositif électronique 11 étant masqué par des portions métallisées 30 définissant les caractères.

La figure 10 illustre un autre exemple de motif défini par une série de caractères dont une portion est formée par le dispositif électronique 11, par exemple le point de la lettre i.

On a représenté sur la figure 11 un motif représentant un objet reconnaissable, par exemple une fleur, le dispositif électronique 11 formant un élément visible de cette image.

On a représenté schématiquement et partiellement, sur la figure 12, une machine papetière de forme ronde.

Cette machine comporte une cuve 40 comportant une suspension 41 de fibres, par exemple des fibres de cellulose, en particulier des linters de coton, et/ou des fibres synthétiques et/ou artificielles dans laquelle est immergé un cylindre de toile rotatif 42 définissant une surface 43 au contact de laquelle se forme la couche fibreuse 2.

On peut incorporer à la couche fibreuse 2, lors de sa formation, la structure de sécurité 3.

On a représenté sur la figure 16 un document de sécurité et/ou de valeur 50 conforme à un autre exemple de mise en oeuvre de l'invention, comportant une structure de sécurité 51 transférée sur une couche fibreuse 2 de l'article 50.

La structure 51, encore appelée «foil» ou «patch», comporte un dispositif électronique 11 et des portions métallisées 52 définissant un motif initialement solidarisé à un support 53 via une couche de libération 54, comme illustré à la figure 17.

La structure 51 est collée sur la couche fibreuse 2 à l'aide d'une couche d'adhésif 55.

La structure 51 peut être transférée à chaud sur la couche fibreuse 2.

La couche 2 et la structure 51 sont alors entraînées en déplacement dans le même sens au moyen d'une machine comportant des premier 56 et deuxième 57 cylindres rotatifs. Après ce passage, le support 53 et la couche de libération 54 sont séparés du reste de la structure 51 qui reste solidaire de la couche 2.

Le motif formé sur la structure 51 peut être similaire à une information 59 visible sur le document, comme illustré à la figure 16.

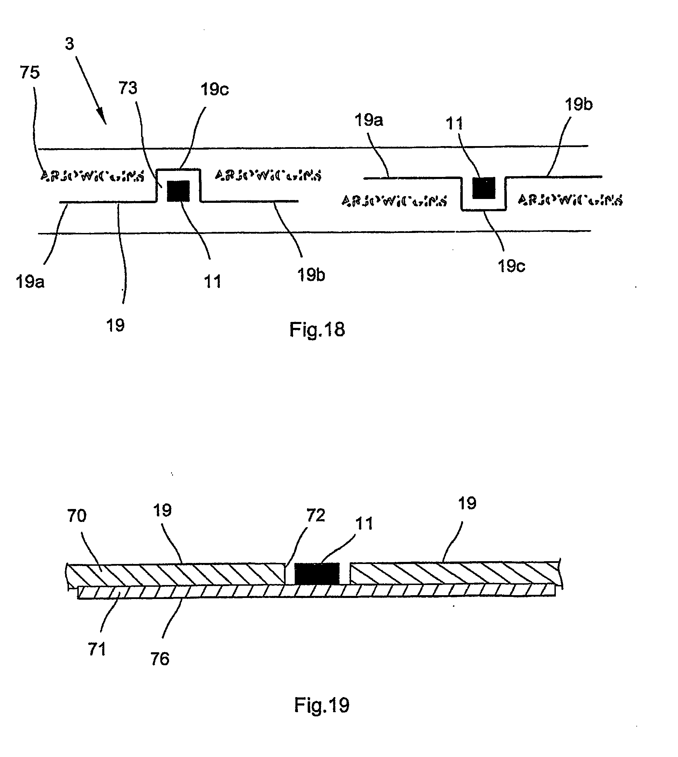

La structure 3 représentée aux figures 18 et 19 comporte un support 10 comprenant une première couche 70, qui est par exemple constituée par un film d'un matériau transparent, par exemple un film de polyester d'environ 70 µm d'épaisseur, et une deuxième couche 71 laquelle est par exemple constituée par un film d'un matériau transparent également, par exemple un film de polyester de 12 µm d'épaisseur.

Dans l'exemple considéré, la deuxième couche 71 ne s'étend que sur une partie de la longueur de la première couche 70 étant présente sur la structure de manière à constituer le fond d'une cavité 72 formée dans la première couche et recevant le dispositif électronique 11.

L'épaisseur de celui-ci correspond par exemple sensiblement à l'épaisseur de la première couche 70 et la dimension de la cavité 72, lorsqu'observée de dessus, est par exemple légèrement supérieure à celle du dispositif électronique 11.

Les première 70 et deuxième 71 couches sont par exemple rendues solidaires par collage ou par laminage à chaud ou par co-extrusion.

La première couche 70 porte une antenne d'amplification 19 qui peut se présenter, comme dans l'exemple illustré, avec deux branches 19a, 19b réunies par une portion intermédiaire 19c épousant sensiblement le contour du dispositif 11 de manière à former avec celui-ci un intervalle 113 de largeur sensiblement constante.

La structure 3 peut comporter également une inscription 75, formée par exemple par métallisation de la première couche 70 dans le même matériau que celui utilisé pour former l'antenne, par exemple du cuivre, l'épaisseur de cuivre étant par exemple de 1 µm environ.

L'inscription 75 peut encore être formée par une impression d'une encre, de même que l'antenne 19, celle-ci étant alors dans une encre conductrice.

La deuxième couche 71 peut comporter sur sa face extérieure un revêtement 76 qui peut être opaque ou semi réfléchissant, selon l'effet recherché.

Le revêtement 76 est par exemple une métallisation et selon l'épaisseur de métal déposée, par exemple de l'aluminium, on peut obtenir un fond opaque, par exemple de densité optique voisine de 1,7, ou semi-transparent, par exemple de densité optique allant de 0,4 à 1.

Le cas échéant, la deuxième couche 71 peut recevoir sur sa face extérieure une encre colorée afin d'augmenter le nombre de combinaisons colorielles.

Dans une variante non illustrée, la deuxième couche 71 s'étend sur la même longueur que la première 70.

Si la couche de revêtement 76 est opaque, lorsque la structure est observée en réflexion, on peut voir deux couleurs différentes à savoir celle du cuivre de l'antenne d'amplification 19 et de l'inscription 75 et celle du fond en aluminium. Lorsque la structure est observée en transmission, l'observateur ne voit qu'un fil continu uniforme et opaque.

Si le revêtement 76 est semi-réfléchissant, l'observation en transparence permet de voir l'inscription 75 et l'antenne 19 en opaque positif sur fond gris, et l'observation en réflexion permet de voir les deux couleurs, d'une part de l'antenne d'amplification et de l'inscription, et d'autre part du revêtement 76.

Bien entendu, l'invention n'est pas limitée aux exemples de mise en oeuvre qui viennent d'être décrits. Les caracteristiques des divers exemples décrits peuvent notamment se combiner au sein de variantes non illustrées.

L'une au moins des couches de revêtement formant l'élément de sécurité et/ou décoratif peut incorporer, si on le souhaite, des fibres ou des particules de sécurité.

L'expression «comportant un» doit être comprise comme étant synonyme de « comportant au moins un », sauf si le contraire est spécifié.

## Revendications

1. Article (50) comportant :
- au moins une couche (2), notamment fibreuse, portant une information (59) sous la forme d'un premier motif visible,
- un structure de sécurité (51) solidaire de cette couche (2) et comportant :
o un support,
o au moins un dispositif électronique (11) porté par le support,
o au moins un élément de sécurité et/ou décoratif (52) agencé pour former avec le dispositif électronique (11) un deuxième motif ayant un lien avec l'information, ce deuxième motif étant identique au premier motif à une homothétie près.

2. Article selon la revendication 1, le deuxième motif étant choisi parmi :
- une forme géométrique, notamment une ellipse, un cercle ou un polygone,
- un symbole d'écriture, notamment un caractère alphanumérique,
- une image d'un objet reconnaissable, notamment un logo, un végétal, un animal ou un personnage.

3. Article selon l'une des revendications 1 ou 2, comportant au moins une antenne d'amplification couplée au dispositif électronique, portée par le support.

4. Article selon l'une quelconque des revendications précédentes, l'élément de sécurité et/ou décoratif (14 ; 23-26 ;30 ;52) comportant des portions ayant une forme bien définie, et le dispositif électronique (11) étant disposé d'une manière repérée relativement à ces portions, notamment de manière centrée.

5. Article selon l'une quelconque des revendications précédentes, l'élément de sécurité et/ou décoratif définissant au moins une fenêtre (17) dans laquelle est disposé le dispositif électronique (11).

6. Article selon l'une quelconque des revendications précédentes, l'élément de sécurité et/ou décoratif comportant au moins une couche de revêtement comportant un métal, notamment de l'aluminium.

7. Article selon l'une quelconque des revendications précédentes, le dispositif électronique comportant une puce (11) pourvue d'au moins une antenne intégrée, la structure comportant au moins une antenne d'amplification (19).

8. Article selon la revendication précédente, l'antenne d'amplification (19) étant au moins partiellement visible.

9. Article selon l'une quelconque des revendications précédentes, le support (10) présentant au moins une cavité (72) et le dispositif électronique (11) étant au moins partiellement engagé dans cette cavité, le support comportant une première (70) et une deuxième (71) couches au moins dans le voisinage de la cavité (72) et cette dernière étant formée dans la première couche (70).

10. Article selon la revendication précédente, la première couche portant une antenne d'amplification (19) et la deuxième couche (71) portant un revêtement (76), notamment une métallisation.

11. Article selon la revendication 1, comportant un revêtement (76) opaque derrière le dispositif électronique.

12. Article selon la revendication 1, comportant un revêtement semi réfléchissant (76) derrière le dispositif électronique.

13. Article selon l'une quelconque des revendications précédente, la structure étant au moins partiellement, notamment entièrement, noyée dans la couche (2), notamment fibreuse.

14. Article selon l'une des revendications précédentes, la structure de sécurité s'étendant d'un premier bord de l'article à un deuxième bord, opposé au premier.

## Claims

1. An article (50) comprising:
- at least one layer (2), in particular fibrous, supporting an item of information (59) in the form of a first visible design,
- a security structure (51) secured to said layer (2) and comprising:
• a mount,
• at least one electronic device (11) supported by the mount,
• at least one security and/or decorative element (52) arranged to form with the electronic device (11) a second design having a link with the item of information, said second design being indentical to the first design give or take one homothetic transformation.

2. Article according to claim 1, the second design being chosen from:
- a geometric shape, particularly an ellipse, a circle or a polygon,
- a written symbol, particularly an alphanumeric character,
- an image of a recognizable object, particularly a logo, a plant, an animal or a person.

3. Article according to claim 1 or claim 2, comprising at least one amplifying antenna coupled to the electronic device, supported by the mount.

4. Article according to any preceding claim, the nonelectronic security and/or decorative element (14; 23-26; 30; 52) comprising portions having a well-defined shape, and the electronic device (11) being placed in a manner marked-out relative to these portions, in particular in a centered manner.

5. Article as claimed in any preceding claim, the security and/or decorative element defining at least one window (17) in which the electronic device (11) is placed.

6. Article as claimed in any preceding claim, the security and/or decorative element comprising at least one coating layer comprising a metal, in particular aluminium.

7. Article as claimed in any preceding claim, the electronic device comprising a chip (11) provided with at least one integrated antenna, the structure comprising at least one amplifying antenna (19).

8. Article as claimed in the preceding claim, the amplifying antenna (19) being at least partially visible.

9. Article as claimed in any preceding claim, the mount (10) having at least one cavity (72) and the electronic device (11) being at least partially engaged in this cavity, the mount comprising a first layer (70) and a second layer (71) at least in the vicinity of the cavity (72) and the latter being formed in the first layer (70).

10. Article as claimed in the preceding claim, the first layer (70) supporting an amplifying antenna (19) and the second layer (71) supporting a coating, in particular metallization.

11. Article as claimed in claim 1, comprising an opaque coating (76) behind the electronic device.

12. Article as claimed in claim 1, comprising a semi-reflective coating (76) behind the electronic device.

13. Article as claimed in any preceding claim, the structure being at least partially sunk, in particular entirely, into the layer (2), in particular fibrous.

14. Article as claimed in any preceding claim, the security structure extending from a first edge of the article to a second edge opposite to the first.

## Patentansprüche

1. Gegenstand (50), aufweisend:
mindestens eine Schicht (2), insbesondere eine faserige, die Informationen (59) in Form eines ersten sichtbaren Motivs trägt,
eine Sicherheitsstruktur (51), die mit der Schicht (2) verbunden ist und Folgendes aufweist:
einen Träger,
mindestens eine vom Träger getragene elektronische Einrichtung (11),
mindestens ein Sicherheits- und/oder Schmuckelement (52), das eingerichtet ist, mit der elektronischen Einrichtung (11) ein zweites Motiv zu bilden, das einen Bezug zu der Information aufweist und bis etwa auf eine Ähnlichkeitstransformation zum ersten Motiv identisch ist.

2. Gegenstand nach Anspruch 1, wobei das zweite Motiv aus Folgendem ausgewählt ist:
einer geometrischen Form, insbesondere einer Ellipse, einem Kreis oder einem Polygon,
einem Schriftsymbol, insbesondere einem alphanumerischen Zeichen,
einem Bild eines wiedererkennbaren Objekts, insbesondere einem Logo, einer Pflanze, einem Tier oder einer Persönlichkeit.

3. Gegenstand nach einem der Ansprüche 1 bzw. 2, der mindestens eine vom Träger getragene, mit der elektronischen Einrichtung verbundene Zusatzantenne aufweist.

4. Gegenstand nach einem der vorhergehenden Ansprüche, wobei das Sicherheits-und/oder Schmuckelement (14; 23-26; 30; 52) Abschnitte mit wohldefinierter Form aufweist und die elektronische Einrichtung (11) in auffindbarer Weise mit Bezug zu den Abschnitten, insbesondere in zentrierte Weise angeordnet ist.

5. Gegenstand nach einem der vorhergehenden Ansprüche, wobei das Sicherheits- und/oder Schmuckelement mindestens ein Fenster (17) bildet, in dem die elektronische Einrichtung (11) angeordnet ist.

6. Gegenstand nach einem der vorhergehenden Ansprüche, wobei das Sicherheits- und/oder Schmuckelement mindestens eine Überzugsschicht mit einem Metall, insbesondere aus Aluminium aufweist.

7. Gegenstand nach einem der vorhergehenden Ansprüche, wobei die elektronische Einrichtung einen Chip (11) aufweist, der mit mindestens einer integrierten Antenne versehen ist, wobei die Struktur mindestens eine Zusatzantenne (19) aufweist.

8. Gegenstand nach dem vorhergehenden Anspruch, wobei die Zusatzantenne (19) mindestens teilweise sichtbar ist.

9. Gegenstand nach einem der vorhergehenden Ansprüche, wobei der Träger (10) mindestens eine Ausnehmung (72) aufweist und die elektronische Einrichtung (11) mindestens teilweise in die Ausnehmung eingreift, wobei der Träger eine erste (70) und eine zweite (71) Schicht aufweist, die mindestens in der Nähe der Ausnehmung (72) vorgesehen sind, wobei letztere in der ersten Schicht (70) vorgesehen ist.

10. Gegenstand nach dem vorhergehenden Anspruch, wobei die erste Schicht eine Zusatzantenne (19) und die zweite Schicht (71) einen Überzug (76), insbesondere eine Metallisierung trägt.

11. Gegenstand nach Anspruch 1 mit einem undurchsichtigen Überzug (76) hinter der elektronischen Einrichtung.

12. Gegenstand nach Anspruch 1 mit einem halb reflektierenden Überzug (76) hinter der elektronischen Einrichtung.

13. Gegenstand nach einem der vorhergehenden Ansprüche, wobei die Struktur mindestens teilweise, insbesondere insgesamt in der insbesondere faserigen Schicht (2) versenkt ist.

14. Gegenstand nach einem der vorhergehenden Ansprüche, wobei die Sicherheitsstruktur von einem ersten Rand des Gegenstands zu einem dem ersten gegenüberliegenden zweiten Rand verläuft.
